(19) Europäisches Patentamt

European Patent Office

Office européen des brevets

(11) **EP 4 459 262 B1**

(12) **EUROPEAN PATENT SPECIFICATION**

(45) Date of publication and mention
of the grant of the patent:
**02.07.2025 Bulletin 2025/27**

(21) Application number: **23382418.4**

(22) Date of filing: **05.05.2023**

(51) International Patent Classification (IPC):
**G01K 11/125** (2021.01)     **G01N 21/17** (2006.01)
**G01K 17/00** (2006.01)     **G01N 25/18** (2006.01)

(52) Cooperative Patent Classification (CPC):
**G01N 21/171; G01K 11/125; G01K 17/00;
G01N 21/1717; G01N 25/18**

(54) **DEVICE AND METHOD FOR THERMAL DIFFUSIVITY ANALYSIS**

VORRICHTUNG UND VERFAHREN ZUR TEMPERATURLEITFÄHIGKEITSANALYSE

DISPOSITIF ET PROCÉDÉ D'ANALYSE DE DIFFUSIVITÉ THERMIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**06.11.2024 Bulletin 2024/45**

(73) Proprietor: **Consejo Superior de Investigaciones
Cientificas**
**28006 Madrid (ES)**

(72) Inventors:
• **Reparaz, Juan Sebastian**
**Barcelona (ES)**
• **Kai, Xu**
**Barcelona (ES)**
• **Campoy-Quiles, Mariano**
**Barcelona (ES)**

(74) Representative: **Pons**
**Glorieta Rubén Darío 4**
**28010 Madrid (ES)**

(56) References cited:
**WO-A1-2023/031494     US-A1- 2005 036 136**

• **PÉREZ LUIS A ET AL: "Anisotropic
thermoreflectance thermometry: A contactless
frequency-domain thermoreflectance approach
to study anisotropic thermal transport", REVIEW
OF SCIENTIFIC INSTRUMENTS, AMERICAN
INSTITUTE OF PHYSICS, 2 HUNTINGTON
QUADRANGLE, MELVILLE, NY 11747, vol. 93, no.
3, 29 March 2022 (2022-03-29), XP012277994,
ISSN: 0034-6748, [retrieved on 20220329], DOI:
10.1063/5.0066166**
• **RAHMAN MIZANUR ET AL: "Measuring the
thermal properties of anisotropic materials using
beam-offset frequency domain
thermoreflectance", JOURNAL OF APPLIED
PHYSICS, AMERICAN INSTITUTE OF PHYSICS, 2
HUNTINGTON QUADRANGLE, MELVILLE, NY
11747, vol. 123, no. 24, 26 June 2018
(2018-06-26), XP012229546, ISSN: 0021-8979,
[retrieved on 20180626], DOI: 10.1063/1.5033966**

**Description**

**OBJECT OF THE INVENTION**

The object of the present invention is a device and method based on beam-offset frequency-domain thermoreflectance (BO-FDTR) suitable to study thermal transport with enhanced sensitivity to in-plane heat flow. It uses a 1-dimensional (1D) heat source that allows to probe the thermal field at larger distances from the heat source, providing enhanced sensitivity to in-plane thermal transport. In addition, the spatial dependence of the thermal response at distances larger than the typical dimensions of the heat source is insensitive to the specific shape of the heat source. Regarding the data analysis procedure, it does not require any computational efforts.

**BACKGROUND OF THE INVENTION**

The study of in-plane thermal transport in bulk and low dimensional materials, such as the case of 2-dimensional (2D) layered materials, has gained considerable momentum in recent years.

Naturally, the study of in-plane thermal transport leads, in most cases, to the complete determination of the elements of the thermal conductivity tensor ($\kappa_{ij}$), which is relevant for materials exhibiting a rather high degree of thermal anisotropy, or for the case of the "artificial anisotropy" induced by low dimensionality, e.g., in the case of crystalline (or semi-crystalline) thin films.

The study of thermal anisotropy is typically achieved by studying the in-plane (i.e., within the plane containing the surface of the sample) elements of the thermal conductivity tensor. In other words, experimental approaches to study thermal anisotropy are mostly based in achieving experimental sensitivity to in-plane thermal anisotropy, which has been successfully demonstrated through different experimental configurations by several research groups.

Electrical methods such as, e.g., the recent extension of the 3-Omega method, where the heater and thermometer are located in different spatial position on the surface of the sample, have been proven successful to study thermally anisotropic materials.

However, these approaches are most convenient for electrically insulating samples, otherwise, the metallic transducer must be electrically insulated from the sample, a task that in some cases can be challenging due to the presence of current leakage from the metallic transducer to the sample.

Additionally, electrical methods also require considerable fabrication efforts since, for each in-plane direction that aims to be investigated, one specific sample must be fabricated.

Alternatively, several contactless methods typically based on time- or frequency-domain thermoreflectance have also been successfully demonstrated to address thermal anisotropy.

Three main experimental strategies were followed:

(i) beam-offset experiments based on time- or frequency domain thermoreflectance using a focused Gaussian (0D, isotropic) heat source,
(ii) collinear beam experiments using an elliptically-shaped (2D, anisotropic) heat source, and
(iii) collinear beam experiments using a line-shaped (1D, anisotropic) heat source (resembling the geometry used in the 3-Omega method but in a contactless fashion).

Although all these methodologies have been proven successful to determine the complete elements of the thermal conductivity tensor, they present some aspects which have the potential to be improved.

For example, the methods developed within (i) and (ii) typically suffer from the influence of the shape of the heat source (actually its spatial energy distribution) on the acquired data, which originates from the rather small spatial offsets that can be set between the heat source and the probe. Typically, for 0D heat sources (approximated as focused Gaussian beams) large offsets cannot be achieved due to the rapid spatial decay of the thermal field.

On the other hand, the method developed in (iii) avoids the explicit knowledge of the shape of the heat source, similarly as for the case of the 3-Omega method, but at the expense of precisely knowing the temperature coefficient of reflectance of the surface of the sample (or transducer in most cases), since the absolute temperature must be known to compute the thermal conductivity.

**DESCRIPTION OF THE INVENTION**

The present invention describes a contactless device and method for studying thermal transport with enhanced sensitivity to in-plane heat conduction, which is based on beam-offset frequency-domain thermoreflectance. In particular, the device and method are specifically relevant for, but not limited to, the study of anisotropic materials, since in the case of having a fully isotropic material, any other method already developed to measure out-of-plane thermal transport would be enough.

In-plane and out-of-plane refer to the spatial direction being studied, i.e., contained in the plane of a sample surface or perpendicular to it, respectively.

Regarding the type of anisotropy that a sample may present, it can be of two types: (1) Natural: which originates in the intrinsic properties of a material, for instance bulk crystalline materials with non-cubic symmetry, layered materials, oriented polymers, etc; and (2) Artificial: this case corresponds, for example, to the widely used case of "thin films", in which the anisotropy originates from the reduction of dimensionality of a sample in one or more of its spatial directions.

The method is based on measuring the phase lag between a thermal excitation and a detection, hence, rendering the thermal diffusivity of a studied sample. Particularly, the method uses a 1-dimensional heat source (a pump laser) with uniform power distribution along its principal direction as thermal excitation, which provides a number of advantages as compared to point-like heat sources, as typically used in time- and frequency-domain thermoreflectance experiments.

In particular, using a linear heat source (a pump laser) leads to a slower spatial decay of the temperature field (as compared to point-like heat sources) in the direction perpendicular to the line-shaped heat source (pump laser), allowing to probe the temperature field at larger distances from the heater, hence, enhancing the sensitivity to in-plane thermal transport.

The method also makes it possible to study in-plane heat transport on substrates even when using a metallic transducer.

In addition, one of its key advantages is that, for harmonic excitation sources, the phase lag ($\phi$) between the thermal excitation (line-shaped heater) and the detection exhibits a linear relation with their in-plane spatial offset ($\Delta x$), and where the slope, $\partial\phi(f)/\partial\Delta x$, is proportional to the thermal diffusivity of the sample for a given modulation frequency, $f$, of the heat source.

In this way, the linear relation between the phase lag and the spatial offset considerably simplifies the data analysis process, i.e., the thermal diffusivity (or thermal conductivity) of the samples are readily obtained through a linear fit of $\phi(\Delta x, f)$.

The first object of the invention is a device for thermal diffusivity analysis of a sample of a solid-state material that reflects light, at least partially, that comprises:

- a pump laser with a beam propagation ratio (M2), preferably smaller than 1.2, that acts as the heat source, which works with a wavelength set between $\lambda^{pump}$ = 250-1500 nm, preferably 400-880 nm, with power modulation capability to a harmonic waveform, generating a pump beam,
- an optical element that modifies the intensity distribution of the pump laser such that, after focusing with a lens (or objective lens), the image of the laser results in a narrow (< 10 $\mu$m) and long line (400 $\mu$m - 1000 $\mu$m), with uniform intensity distribution,
- a probe laser that acts as a detector, which works with a wavelength set between $\lambda^{probe}$ = 250-1500 nm, preferably 400-880 nm, and a laser intensity constant in time, generating a probe beam,
- an electronic device, connected to the pump laser, that harmonically modulates the power of the pump laser between 10 Hz and 100 kHz,
- a deflectable mirror, following the pump laser, to control the offset between the pump and probe beams on the sample,
- optionally, a noise eater placed at the output of the probe laser which reduces the laser noise, especially in the range below 5 kHz,
- a first beam splitter following the noise eater that couples the probe beam into an optical axis and at the same time generates a sample of the probe beam,
- a second beam splitter (dichroic) following the deflectable mirror that couples the pump beam into the optical axis,
- an objective lens, following the beam splitters, that focuses the beams on the sample, that reflect on it generating a pump beam back reflection and probe beam back reflection,
- two notch-filters, that select the pump back reflection and probe back reflection wavelength,
- a third beam splitter that couples the pump back reflection and probe back reflection in the two mechanically controlled notch-filters,
- an AC-coupled balanced detector, following the third beam splitter, that receives the pump back reflection and probe back reflection in a first input (B) from the notch-filter and the sample of the probe laser in a second detector input (A) from the ND filter, generating a frequency modulated voltage arising from the thermal oscillations on the surface of the sample,
- a neutral density filter (ND) that receives the sample of the probe beam, and
- a lock-in amplifier, connected to the output channel of the detector.

The limitation in the wavelengths of both lasers (pump and probe lasers) is the visible plus part of the near infrared range, and on the other hand the deep ultraviolet. The wavelengths of the two lasers should not follow an order, i.e., the pump wavelength can be shorter than the probe wavelength, and vice versa. They should be different wavelengths, with their central wavelengths separated at least 15 nm.

Regarding the power density range needed for the pump laser, which is the one that generates the thermal gradient in the sample, it is directly related to the value of the thermal diffusivity of the sample. The minimum power density to be used corresponds to samples with very low thermal diffusivity and there is no limiting value, i.e. the power can be reduced with a neutral density filter to match the thermal properties of the material. In the opposite case, materials with high thermal diffusivity, a more powerful laser can always be used to generate the necessary thermal gradients. There is no limitation for the maximum power density required, preferably it should be maintained below 300 MW/m$^2$, with typical values ranging from 1 MW/m$^2$ to 100 MW/m$^2$.

The second object of the invention is a method for thermal diffusivity analysis, that comprises the following steps:

i) providing a pump laser, which acts as the heat source, working with a wavelength range between $\lambda^{pump}$ = 250-1500 nm, preferably 400-880 nm, with a beam propagation ratio (M2), preferably smaller than 1.2, and a uniform intensity distribution, generating a pump beam directed to a sample of a solid-state material that reflects light at least partially,

ii) providing a probe laser, working with a wavelength set between $\lambda^{probe}$ = 250-1500 nm, preferably 400-880 nm, and a laser intensity constant in time, generating a probe beam directed to the sample,

iii) modifying the spatial intensity distribution of the pump laser, to obtain a spatially uniform intensity distribution,

iv) increasing the pump laser power density continuously until a temperature rise of the order of several kelvin is observed on the sample,

v) harmonically modulating the power of the pump in a range beam between 10 Hz and 100 kHz. The selection of this range depends on the sample under investigation. The highest frequency should be chosen as the highest possible frequency providing a detectable signal, and it is typically smaller than 100 kHz. For the minimum frequency the criterion depends on the dimensionality of the sample: For 2D or quasi-2D samples the minimum frequency should be 10 Hz. For 3D samples, the minimum excitation frequency should be such that ratio between the spatial offset between the pump and probe beams, and the thermal penetration depth in the specimen is > 1. The number of excitation frequencies should be as large as possible in order to reduce the error in the determination of the thermal diffusivity,

vi) measuring the phase of the pump beam reflected from the sample and setting it as zero-phase lag,

vii) measuring the phase lag of the probe beam reflected from the sample,

viii) increasing the spatial offset on the sample between the pump and probe beams at least by 1 micron,

ix) repeating steps vii) and viii), to obtain the phase lag between the pump and probe beams as a function of the offset between them,

x) plotting in a curve the phase lag as a function of the offset between the pump and probe beams,

xi) computing the slope of the curve of step x) that renders the thermal diffusivity of the studied sample for the initially selected excitation frequency of the pump,

xii) changing the excitation frequency and repeating steps v) to xi) changing the excitation frequency of the pump laser,

xiii) compute the thermal diffusivity using the following expression:

$$D = \pi / [\partial^2 \phi / (\partial \Delta x \partial f^{1/2})]^2.$$

wherein D is the thermal diffusivity, *x* are the spatial coordinates, $\phi$ is the phase lag and *f* is the excitation frequency in Hz.

Regarding the type of materials that can be studied with these device and method, the division would be between 3D materials (bulk), quasi-2D materials (thin layers suspended or supported by a substrate) and 2D materials.

On the other hand, the group of materials can also be divided into two categories: (a) materials that absorb the wavelengths used (pump and probe), and (b) materials that are transparent to the wavelengths used (pump and probe). In case (a) the materials are studied by applying the method on the surface of the material in question, however, in case (b) a thin metallic layer (with a thickness ranging from 40 to 100 nm) must be deposited to overcome the fact that the material does not absorb light, and thus cannot be heated by the pump laser. Therefore, when the materials are transparent to the pump laser wavelength used, the method comprises a previous additional step of depositing a thin metallic layer on top of the sample.

In the latter case the light is absorbed by the metallic transducer, whose thickness is not fixed and can be varied, although the best results are obtained for thicknesses close to 60 nm. When the deposition of a transducer is necessary, the effect of heat conduction through the transducer must be taken into account, which occurs when the thermal conductivity of the transducer is approximately 10 times greater than that of the sample to be studied.

The conditions that a material must meet in order to be studied as a sample by this method are:

(i) it must be a solid-state material. Liquids or gases cannot be studied,

(ii) the roughness of the material must be small enough for the sample to partially reflect light. A high roughness, besides reducing the reflectivity of the sample, cannot be modelled correctly by using the mathematical model described below, but must be taken into account using numerical methods such as finite elements. Samples should have, preferably, a roughness smaller than a fraction of the used wavelengths.

Regarding the range of thermal diffusivity to be studied, there is no maximum limit since increasing the power of the laser pump can always obtain signal in materials that conduct heat very well. There is no minimum value either, since the laser power can always be reduced so as not to "burn" the sample under study.

The described device and method have the following advantages:

- The sensitivity to in-plane heat transport is substantially enhanced, which is simply a consequence of the geometry of the measurements. Imposing large offsets between the pump and probe naturally leads to a dominant role of the in-plane component of the thermal diffusivity/conductivity.
- Since the typical offsets chosen are large compared to the size of the heat source, the recorded data is independent on the detailed shape of the pump beam (heater), which substantially simplifies the data modelling. In fact, a linear fit of the experimental data is sufficient to extract the in-plane component of the thermal diffusivity, and
- using a linear heat source imposes a frequency range between 10 Hz and 100 kHz, which substantially reduces the price and technical demands on the device compared to standard thermoreflectance measurements. The latter uses Gaussian focused heat sources, where the frequency modulation range is shifted to the MHz frequency range.

## DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

Figure 1.- Shows the schematics of the device for thermal diffusivity analysis.

Figure 2.- Shows the schematics of the different heat transport geometries studied: (a) a quasi-2D sample consisting on a suspended thin film; (b) bulk sample with no transducer; (c) bulk sample with a transducer or thin film deposited on its surface.

Figure 3.- Shows: (a) phase lag vs. offset for a 1 $\mu$m thick suspended Si thin film for different excitation frequencies between 5 kHz and 20 kHz; (b) slopes obtained from fitting $\phi$ vs $\Delta$x for each excitation frequency; (c) phase lag vs. offset for a 100 nm thick suspended Si thin film for different excitation frequencies between 4 kHz and 14 kHz; (d) slopes obtained from fitting $\phi$ vs $\Delta$x for each excitation frequency.

Figure 4.- Shows: (a) phase lag vs. offset for a Bi single crystal, and for different excitation frequencies between 3 kHz and 8 kHz; (b) slopes obtained for fitting $\phi$ vs $\Delta$x for each excitation frequency.

Figure 5.- Shows: (a) phase lag vs. offset for a Si substrate with a 60 nm thick Au transducer for different excitation frequencies between 7 kHz and 14 kHz; (c) slopes obtained from fitting $\phi$ vs $\Delta$x for each excitation frequency; (b) phase lag vs. offset for a Glass substrate with a 60 nm thick patterned Au transducer for different excitation frequencies between 17 Hz and 150 Hz; (d) slopes obtained from fitting $\phi$ vs $\Delta$x for each excitation frequency for the as-deposited Au transducer as well as for the patterned transducer.

## PREFERRED EMBODIMENT OF THE INVENTION

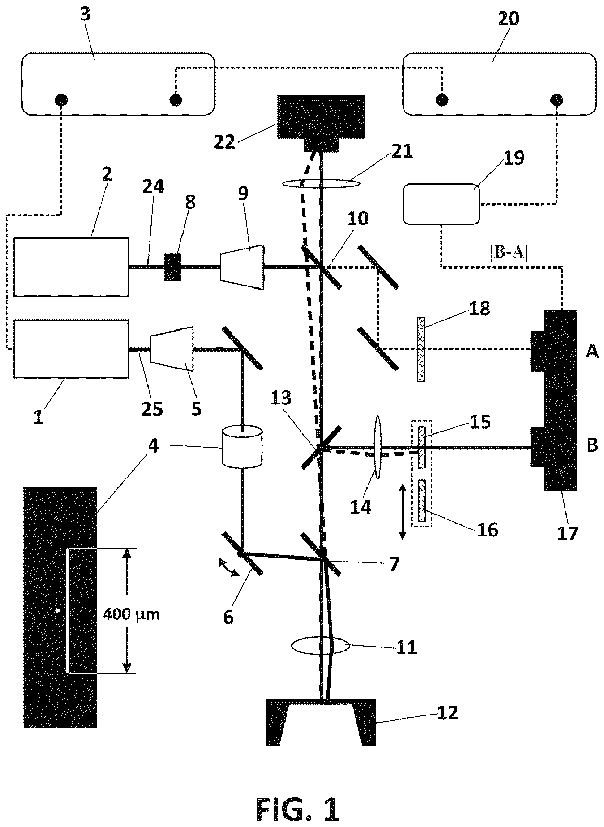

It is described below, with the help of figures 1 a 5, a preferred embodiment of the device and method for thermal diffusivity analysis of a sample (12), object of the present invention.

The device, first object of the invention and shown in detail in figure 1, comprises a pump laser (1) with a beam propagation ratio (M2) preferably smaller than 1.2, that acts as a heat source, which works with a wavelength set to $\lambda^{pump}$ = 405$\pm$2 nm, uniform intensity distribution and power modulation capability, generating a pump beam (25).

The power of the pump laser (1) needs to be modulated to a harmonic waveform. There are two routes to achieve this. Firstly, with a pump laser (1) with laser intracavity modulation. In this way, the pump laser (1) already has a pre-installed modulation option within the laser cavity. AC power modulation is achieved using an external AC voltage source (wavefunction generator), typically in the range from 0 to 1.5 V. Secondly, with external modulation, wherein the device additionally comprises an electro-optical modulator (EOM) following the pump laser (1) to modulate its power. The electro-optical modulator is fed by an external AC voltage source (wavefunction generator), typically in the range from 0 to 10 V, which is amplified by a factor of 15x using the EOM driver.

Additionally, the pump laser (1) needs a uniform intensity distribution. Most laser systems typically exhibit a Gaussian spatial power distribution at their output, hence, several strategies could be followed to achieve this result. For this reason, the device comprises an optical element (4) that modifies the intensity distribution of the pump laser such that, after focusing with a lens (or objective lens), the image of the laser results in a narrow (< 10 $\mu$m) and long line (400 $\mu$m - 1000 $\mu$m), with uniform intensity distribution,

Firstly, the optical element (4) could be a diffractive optical element (DOE) (4), following the pump laser (1), which is responsible for homogenizing its intensity, i.e., the Gaussian distribution is converted through diffraction into a line-shaped spot with uniform intensity distribution along the long axis and with Gaussian distribution in the perpendicular direction.

The DOE (4) is placed on a manual or motorized angular rotation unit to control the alignment of the line-shaped pump with respect to the axes of the sample (12). The diameter of the pump beam (25) is tuned to meet the specifications (beam input diameter) of the DOE (4) using a variable optical beam expander (5) placed between the pump laser (1) and the DOE (4).

Secondly, the optical element (4) could be a fiber with a square core, following the pump laser (1), to induce mode mixing. The square core fiber introduces mode mixing which leads to uniform spatial power distribution. The resulting beam is focused onto the surface of the sample using a cylindrical lens, hence, defining a line-shaped heater with uniform spatial power distribution.

Thirdly, the optical element (4) could be an optical diffuser in combination with a cylindrical lens, following the pump laser (1). The diffuser mixes the Gaussian beam leading to a uniform spatial power distribution. The resulting beam is subsequently focused using a cylindrical lens.

The device also comprises a probe laser (2) that acts as a detector, which works with a wavelength set to $\lambda^{probe}$ = 532$\pm$0.001 nm, and a laser intensity approximately constant in time, generating a probe beam (24).

Connected to the pump laser (1) is an electronic device (3), that harmonically modulates (intracavity modulation) the power of the pump laser (1) in a frequency range between 10 Hz and 100 kHz. The selection of this range depends on the sample (12) under investigation. The highest frequency should be chosen as the highest possible frequency providing detectable signal (12), and it is typically smaller than 100 kHz. For the minimum frequency the criterion depends on the dimensionality of the sample (12): For 2D or quasi-2D samples (12) the minimum frequency should be 10 Hz. For 3D samples (12), the minimum excitation frequency should be such that ratio between the spatial offset between the pump and probe beams (25, 24), and the thermal penetration depth in the specimen is > 1. More specifically, the frequency range is a frequency range where $D=\pi I[\partial^2\phi/(\partial\Delta x\partial f^{1/2})]^2$ is constant.

Following the probe laser (2) the device comprises a noise eater (8), that receives the probe beam (24) and reduces its intrinsic power fluctuations, which is particularly useful for frequencies below 5 kHz, i.e., useful for samples exhibiting low thermal diffusivity values since for these a rather low frequency range must be used.

In the pump beam (25) path, the device comprises a deflectable mirror (6), following pump laser (1), to control the offset between the pump beam (25) and probe beam (24).

Its position is previously calibrated using a CCD (charged coupled device) in the position of the sample (12). Hence, the deflection angle of the deflectable mirror (6) is correlated with the offset between the pump beam (25) and probe beams (24). This step is the only mandatory calibration to set up the experiments.

A beam expander (9) and first beam splitter (10) are placed following the noise eater (8) that couples the probe laser beam (24) into a main optical axis and at the same time creates a sample of the probe laser beam (24).

A second dichroic beam splitter (7) is placed following the deflectable mirror (6), coupling the pump laser beam (25) into the main optical axis.

In the main optical axis an objective lens (11) is placed following the beam splitters (7, 10), that focuses the beams (24, 25) on a sample (12).

Once the beams (24, 25) have been reflected on the sample (12) a 90:10 beam splitter (13) (R:T) couples the back reflection of the pump and probe beams (25, 24) after focusing on the sample (12) into a lens (14).

Following the lens (14) a first and a second mechanically controlled notch-filters (15, 16) select the laser wavelength of the back reflection of the pump and probe beams (25, 24). An interferometric filter set at the probe wavelength, following the notch-filters (15, 16) is used to reject ambient light as well as any remaining amount of light arising from the pump laser.

The device also comprises a neutral density filter (18) (ND) that receives the sample of the probe beam is used to adjust the intensity of the reference input of the balanced detector.

A large area (5 mm in diameter) AC-coupled balanced detector (17) following the interferometric filter, receives the back reflection of the pump and probe beams (25, 24) in a first input (B), and the sample of the probe laser beam (24) independently coupled to a second detector input (A).

The output voltage of the detector (17) is sensitive to the difference between both inputs (A, B) provided that the difference signal is time-dependent. This is achieved by placing high pass filter before the amplification stage inside the detector (17). Hence, the output of the detector (17) is a frequency modulated voltage arising from the thermal oscillations on the surface of the sample (12).

In order to minimize the laser power noise, the optical path of the back reflection of the probe beam (24), and that of the reference probe beam (24) are kept similar within 1 cm, and the input power on both inputs of the detector (17) is balanced adjusting the power of the reference probe beam using a neutral density filter.

The output of the detector (17) is sent to a low noise amplifier (LNA) (19) and later to a lock-in amplifier (10), as shown in figure 1.

The pump laser (1) is also coupled to the lock-in amplifier (20) in order to obtain a reference phase for the thermal signal using the same beam path, i.e. first the pump laser signal (amplitude and phase) is measured by the lock-in amplifier (20) after which the mechanical notch-filters (15, 16) are switched and the amplitude and phase of the thermal signal is obtained. This process is sequentially repeated for each excitation frequency.

The device additionally comprises an optical camera (22) placed pointing to the main optical axis, which is used to calibrate the offset between the pump and probe beams. The pixel size, taken from the specifications of the camera, is used to calibrate the spatial offsets between the pump and probe beam for the different deflection angles of the deflectable mirror.

The second object of the invention is the method for thermal diffusivity analysis, that in the following embodiment, uses the device previously described. It comprises the steps of firstly, providing the pump laser (1), working with a wavelength set to $\lambda^{pump} = 405 \pm 2$ nm, with a Gaussian intensity distribution, generating a pump beam (25) and providing a probe laser (2), working with a wavelength set to $\lambda^{probe} = 532 \pm 0.001$ nm and a laser intensity with RMS noise below 0.5%, generating a probe beam (24). The spatial intensity distribution of the pump laser (1) is modified to obtain a spatially uniform intensity distribution.

Secondly, increasing the pump laser (1) density power continuously until a temperature rise of the order of several kelvin is observed (typically between 5 mW and 300 mW for an area of $4\times10^{-9}$ m$^2$, depending of the thermal properties of the sample (12), whereas the power of the probe laser (1) is kept low in order avoid any heating effects (typically of the order of 100 $\mu$W).

Thirdly, setting the deflectable mirror (6) to its "zero position", i.e., when the pump and probe lasers (1, 2) spatially overlap.

Then, the first notch filter (15) is set to block the probe beam (24) at 532 nm. Hence, the reflection of the pump beam (25) is read by the photodetector B (first input of the detector (17)), and by the lock-in amplifier (20).

The next step is measuring the phase of the pump beam (25) and setting it as the zero-phase lag.

Afterwards, the second notch filter (16) is set to block the pump beam (25), hence, allowing for the probe beam (24) to couple to the detector (17). In this manner, the phase lag of the probe beam (24) is read by the lock-in amplifier (20). Since the zero-phase lag was set in the previous step for the pump beam (25), the obtained phase lag for the probe beam (24) is referred to the pump beam (25).

Before reading out the phase lag of the probe beam (24), the method comprises the step of varying the ND filter (18) in from of the second optical input (A) until the DC signal in both inputs (A, B) is equal. This step is crucial to reduce the noise level, which can be particularly important for frequencies below 5 kHz.

The next step is measuring the phase lag of the probe beam (24) using a time constant for the lock-in amplifier (20) longer than 1s. Before reading the phase lag an integration time of 10s is set in order to allows the lock-in amplifier (10) to reduce noise arising from the probe beam (24).

Then, increasing the offset between the pump and probe beam (24, 25) at least by 1 micron.

The previous steps are repeated from setting the first notch filter (15). In this way, it is possible to obtain the phase lag between the pump and probe beams (25, 24) as a function of the offset between them.

After the previous sequence is concluded, the following step is plotting the phase lag as a function of the offset between the pump and probe beams (25, 24) and then, computing the slope renders the thermal diffusivity of the studied sample (12).

The previous steps are repeated changing the excitation frequency of the pump laser, and finally, the thermal diffusivity is computed using the following expression:

$$D = \pi / [\partial^2 \phi / (\partial \Delta x \partial f^{1/2})]^2$$

wherein $D$ is the thermal diffusivity, $x$ are the spatial coordinates, $\phi$ is the phase lag and $f$ is the excitation frequency in Hz.

In this section we provide the solution of the heat diffusion equation (parabolic approximation) for the case of 1D heat source (pump laser (1)) with uniform power distribution along its principal axis, for the case of 2D/quasi-2D and 3D materials, and under harmonic excitation conditions.

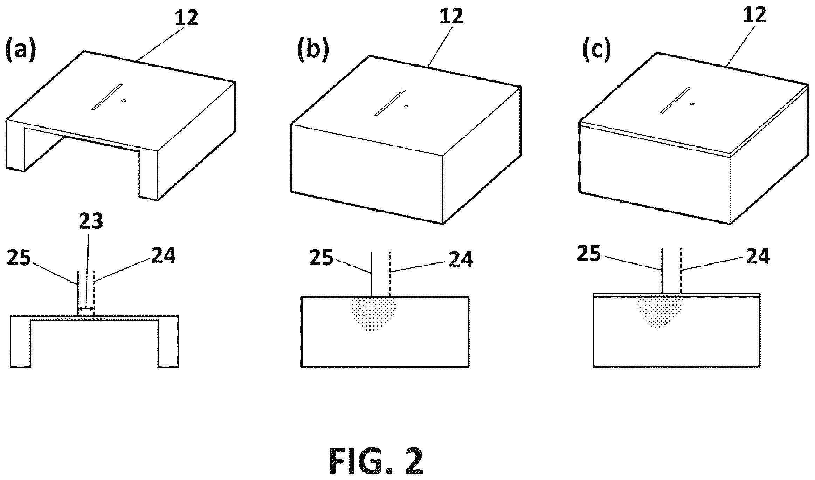

We recall that the key advantage of using a 1D heat source (pump laser (1)) is that no heat propagation occurs along the direction parallel to the line-shaped heat source, hence, reducing the dimensionality of the heat flow geometry and, consequently, of the corresponding heat diffusion equation. Figure 2 displays a schematic of each of the heat flow geometries we studied.

We start by analyzing the case of a 1D heat source (pump laser (1)) with uniform power distribution along its principal direction applied to a 2D (or quasi-2D) material, presented in figure 2A. This case is well described by a 1D heat flow geometry, i.e., no heat flow is present along the direction parallel to the line-shaped heat source. The differential equation which describes the system response is simply the 1D heat diffusion equation as follows:

$$D\frac{\partial^2 T}{\partial x^2} - \frac{\partial T}{\partial t} = -\frac{Q_V}{\rho C_p} \qquad (1)$$

where $T = T(x,t)$ is the temperature, $t$ and $x$ are the temporal and spatial coordinates, respectively, and $x$ is perpendicular to the line-shaped heater, $D$ is the thermal diffusivity, $\rho$ is the density of the material, $C_p$ is the specific heat capacity, and Qv is the volumetric heat generation rate.

Eq. 1 is solved under harmonic excitation conditions, $p(t) = p_0[1 + \cos(\omega t)]/2 = \Re[p_0(1 + e^{i\omega t})/2]$, where $p(t)$ is the time-dependent injected power. In short, the time dependent solution for $T(x,t)$ is obtained by separation of variables as: $T_{ac}(x,t) = \Re[\theta(x)e^{i\omega t}]$. Solving the spatial part of Eq. 1 for $\theta(r)$ and multiplying by $e^{i\omega t}$ renders the complete solution:

$$T(x,t) = \Re\left[\frac{p_0}{2\kappa q}e^{-qx}e^{i\omega t}\right] \qquad (2)$$

or,

$$T(x,t) = \frac{\sqrt{2}p_0\mu_\omega}{4\kappa}e^{-x/\mu_\omega}\cos\left(\frac{x}{\mu_\omega} - \omega t + \frac{\pi}{4}\right) \qquad (3)$$

where $p_0$ is the maximum amplitude of the absorbed power, $\sqrt{\omega}$ is the angular frequency, $\sqrt{\kappa}$ is the thermal conductivity, $D$ is the thermal diffusivity, $\mu = (2D/\omega)^{1/2}$ is the thermal penetration depth, and $q = (i\omega/D)^{1/2}$.

Equation 3 results particularly interesting if considering the spatial dependence of its argument. Besides the time dependent component ($\omega t$) which averages to zero after each cycle, the phase lag, $\phi = x/\mu_\omega$, exhibits a linear dependence on the spatial coordinate, x. Experimentally, $\phi(x)$ is evidenced as the spatial offset between the line-shaped heat source (1D) and the probe beam (0D) positions. Taking the derivative of the phase lag, $\phi$, with respect to the spatial coordinate, x, renders:

$$\frac{\partial \phi}{\partial x} = \mu_\omega^{-1} = \sqrt{\frac{\omega}{2D}} = \sqrt{\frac{\pi}{D}}f^{1/2} \qquad (4)$$

where $\omega = 2\pi f$, and $f$ is the excitation frequency in Hz. Taking the second derivative with respect to $f^{1/2}$ of the previous equation results in:

$$\frac{\partial^2 \phi}{(\partial x)(\partial f^{1/2})} = \sqrt{\frac{\pi}{D}} \qquad (5)$$

which renders the thermal diffusivity of the specimen. We remark that taking the second order derivative of the phase lag, $\phi$, with respect to x and $f^{1/2}$ is a convenient approach since it avoids the explicit dependence of on absolute calibration of the spatial and frequency scales. This is particularly relevant for the spatial coordinate (x), which is prone to larger determination errors as compared to the thermal excitation frequency ($f$).

We next study the case of a 1D heat source with uniform power distribution along its principal direction applied to a 3D isotropic material, shown in figure 2B. This case is well described by a 2D heat flow geometry, since no heat flow is present along the direction parallel to the line-shaped heat source, similarly as in the previous section.

The differential equation which describes the system response is the 2D heat diffusion equation, which we write in cylindrical coordinates given the symmetry imposed by the 1D heat source as follows:

$$\frac{1}{r}\frac{\partial}{\partial r}\left(D \cdot r\frac{\partial T}{\partial r}\right) - \frac{\partial T}{\partial t} = -\frac{Qv}{\rho C_p} \tag{6}$$

The solution for $T(r,t)$ is similar to that originally obtained for the case of the 3-Omega method, and its optical analogue, Anisotropic Thermoreflectance Thermometry (ATT). Note that due to the radial symmetry, we use the radial coordinate, $r$, instead of the Cartesian coordinate, $x$. In other words, the heat flow geometry is 2D, and the solution for the ideal case of a uniform and infinitely long and narrow line-shaped heater is given by the modified zeroth-order Bessel function of the second kind, $K_0(qr)$.

Similarly as we have proceeded in the previous section, a harmonic thermal excitation source leads to the expression for the time-dependent temperature oscillations, i.e., after multiplication by $e^{i\omega t}$:

$$T(r,t) = \Re[K_0(qr)e^{i\omega t}] \tag{7}$$

where we recall that $q = (i\omega/D)^{1/2}$, $|q| = (\omega/D)^{1/2}$, $i^{-1/2} = [1 - i]/(2)^{1/2}$, and $i^{1/4} = -i$. It is particularly interesting to study the limiting cases with $|qr| \ll 1$, and $|qr| \gg 1$. The case with $|qr| \ll 1$ ($|r| \ll 2\mu$), leads to the solution obtained for the case of the 3-Omega and ATT methods.

Here, the thermal penetration depth $(\mu)$ is much larger than the typical values of radial coordinate, $r$. Note that in the previous example the pump (heater) and probe (thermometer) beams are collinear. It can be shown that for $|qr| \to 0$, then $K_0(qr) \propto -\ln(qr)$, which is the usual approximation used to obtain the thermal conductivity of the specimen.

On the other hand, in the limit where $|qr| \gg 1$, it can be shown that $K_0(gr) \approx (\pi/2)e^{-iqr}/qr$. Given the nature of our experiments, we are particularly interested in the limit with $|gr| \gg 1$, which originates in the large offset ($r = \Delta x$) imposed between the 1D heat source and the probe spot as shown in Fig. 2B. Hence, the expression for the temperature oscillations is obtained as follows:

$$T(r,t) = \frac{p_0}{\pi\kappa l}\Re[K_0(qr)e^{i\omega t}] \approx \frac{p_0}{\pi\kappa l}\Re\left[\sqrt{\frac{\pi}{2qr}}e^{-qr}e^{i\omega t}\right] \tag{8}$$

where $l$ is the length of the line-shaped heat source. The former expression can be rearranged after taking the real part of the argument as follows:

$$T(r,t) \approx \frac{p_0}{\sqrt[4]{2}\kappa l}\sqrt{\frac{\mu_\omega}{2\pi r}}e^{-r/\mu}\cos\left(\frac{r}{\mu_\omega} - \omega t + \frac{\pi}{8}\right) \tag{9}$$

Taking the second order derivative of the argument of the previous expression ($\phi' = |q|r/2^{1/2} - \omega t + \pi/2$) with respect to r and $f^{1/2}$, we obtain:

$$\frac{\partial^2 \phi'}{(\partial x)(\partial f^{1/2})} = \sqrt{\frac{\pi}{D}} \tag{10}$$

which is the same expression that we have obtained for the case of 1D heat flow in the previous section (see Eq. 5). The origin of such similarity between the 1D and 2D heat flow cases, is the exponential limit of $K_0(qr)$ for $|qr| \gg 1$.

We note that the previous expression is not valid for $|qr| \ll 1$, since in this case the spatial dependence of the temperature field is $T \propto K_0(qr) \propto -\ln(qr)$.

Regarding figure 2C, the solution is obtained considering that the line-shaped heater has Gaussian power distribution in direction perpendicular to its long axis, and that the focused probe beam (24) is considered as a Delta function of the spatial coordinate, $\delta(x - x_0)$, where $x_0$ is the absolute position of the line-shaped heater.

The previous approximation is valid when the diameter of the focused probe beam (24) is diffraction limited, ($d_{probe} < 1 \mu$m). The frequency-dependent temperature oscillation for different offsets, $\Delta x = x - x_0$, between the heat source and the probe spot positions are:

$$T(\Delta x, \omega) = \frac{p_0}{\pi\kappa_1^\perp l}\int_0^\infty \frac{\exp[-\sigma_p^2\xi^2/8]\cos(\xi\Delta x)}{A_1(\xi)B_1(\xi)}d\xi \tag{11}$$

where $A_1$ and $B_1$ are defined as:

$$A_{j-1} = \frac{A_j \frac{\kappa_j^\perp B_j}{\kappa_{j-1}^\perp B_{j-1}} - \tanh(B_{j-1}d_{j-1})}{1 - A_j \frac{\kappa_j^\perp B_j}{\kappa_{j-1}^\perp B_{j-1}} \tanh(B_{j-1}d_{j-1})}, \quad j = (2, ..., n) \quad (12)$$

$$B_j = \sqrt{\frac{\kappa_j^\parallel}{\kappa_j^\perp}\xi^2 + \frac{i2C_j\rho_j(\omega)}{\kappa_j^\perp}} \quad (13)$$

and,

$$A_n = -\tanh(B_n d_n)^s \quad (14)$$

where $n$ is the number of layers counting from the top surface, i.e., $n = 1$ at the surface where the pump and probe lasers (1, 2) are focused, $n$ = "total number of layers" at the bottom layer, $C_j$ and $\rho_j$ are the specific heat and density of each layer, respectively. The parameter s sets the type of boundary condition at the bottom layer with $s = 0$ for a semi-infinite substrate.

When the substrate thickness is finite, $s = 1$, for adiabatic boundary conditions, and $s = -1$, for the case of isothermal boundary conditions. Finally, the thermal boundary conductance between two layers, $K_{TBC}$, is modeled using the usual assumptions, i.e., a 1 nm thick layer with a small heat capacity (e.g, $C_p \approx 1$ JKg$^{-1}$C$^{-1}$).

We have applied the methodology described in the previous sections to several samples (12) with different heat flow geometries. For all studied samples (12) we have measured the dependence of the phase lag ($\phi$) between the thermal excitation (pump laser (1)) and the response of the sample (12) (probe laser (2)) as a function of their spatial offset, and for different excitation frequencies.

In particular, we have studied 1D heat flow for two suspended Si thin films with large surface areas (in the cm range), and with thicknesses of 2 $\mu$m and 100 nm, as well as a 100 nm thick suspended PDPP4T polymer thin film. The case of 2D heat flow was addressed for: a bulk Bi substrate, a Si bulk substrate covered with 60 nm Au (transducer), and Glass bulk substrate covered with 60 nm Au (transducer).

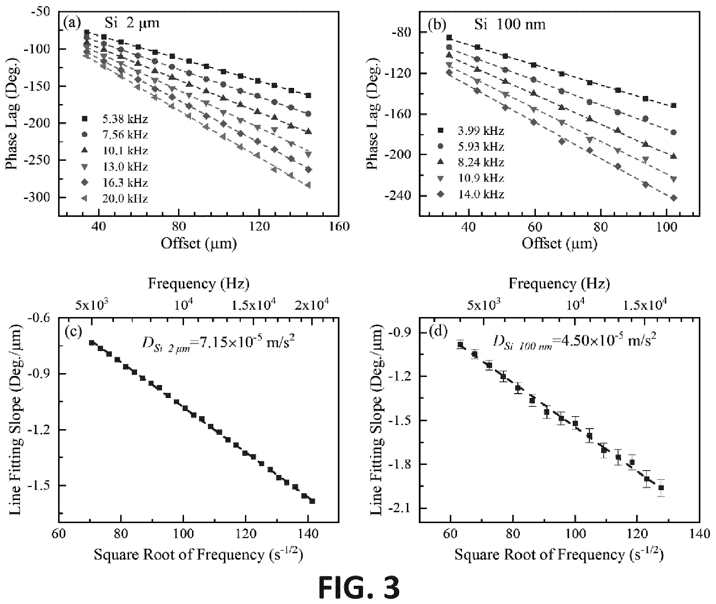

All suspended thin films were measured in vacuum to a lower pressure of 10$^{-7}$ mbar. In all cases, the data was fitted using a linear relation, as predicted by Eq. 3. The collected data for each frequency consists of multiple data points acquired at different offsets, $\Delta x$, which are uniformly distributed in the range from $\approx$30 $\mu$m to 145 $\mu$m. As shown in Figure 3A, the magnitude of $\phi$ increases with increasing frequency and $\Delta x$.

Figure 3B displays the slopes, $\partial\phi/\partial\Delta x$, as obtained from the linear fits of $\phi$ versus $\Delta x$ in Fig. 3A, at each excitation frequency. In all cases, the experimental errors are within the size of the symbols. In good agreement with the prediction of Eq. 5, the slope, $\partial\phi/\partial\Delta x$, exhibits a linear relation with $f^{1/2}$. Hence, using Eq. 5 we obtained the thermal diffusivity for the 2 $\mu$m thick suspended Si thin film as D = 7.15$\times$10$^{-5}$ m$^2$/s, i.e., 82% of the Si bulk value and in good agreement with previous determinations.

Figure 3C displays the corresponding data for the 100 nm thick suspended Si thin film. The data exhibits a similar dependence of $\phi$ on $\Delta x$ and $f^{1/2}$, as compared to the 2 $\mu$m thick suspended Si thin film. However, due to the lower thermal diffusivity of the 100 nm thick suspended thin film, we used a slightly lower $\Delta x$ and $f$ ranges. We note that for this sample the phase lag data points exhibit larger experimental noise, which partly arises from the comparatively lower signal (absolute temperature rise, $\Delta T$) for similar $\Delta x$ and frequency ranges, and which originates from its lower thermal diffusivity.

In addition, this sample is more sensitive to additional noise arising from mechanical vibrations introduced by the environment during the measurement process. Using Eq. 5 we have obtained the thermal diffusivity of the 100 nm thick sample as, $D = 4.50 \cdot 10^{-5}$ m$^2$/s, i.e., 50% of the Si bulk value and also in good agreement with previous determinations.

The reduced values of the thermal diffusivity obtained for both suspended Si thin films arise from their different thickness, which limits the maximum phonon mean free path of the phonons which can transport heat. This represents a good example of anisotropic response arising from the geometry, i.e. what above was named artificial anisotropy.

We have also studied the case of 2D heat flow as discussed. For this purpose, we used a bulk Bi sample with the pump and probe lasers (1, 2) focused directly onto the surface of the sample (12), i.e., without using a metallic transducer as for the suspended thin films in the previous section.

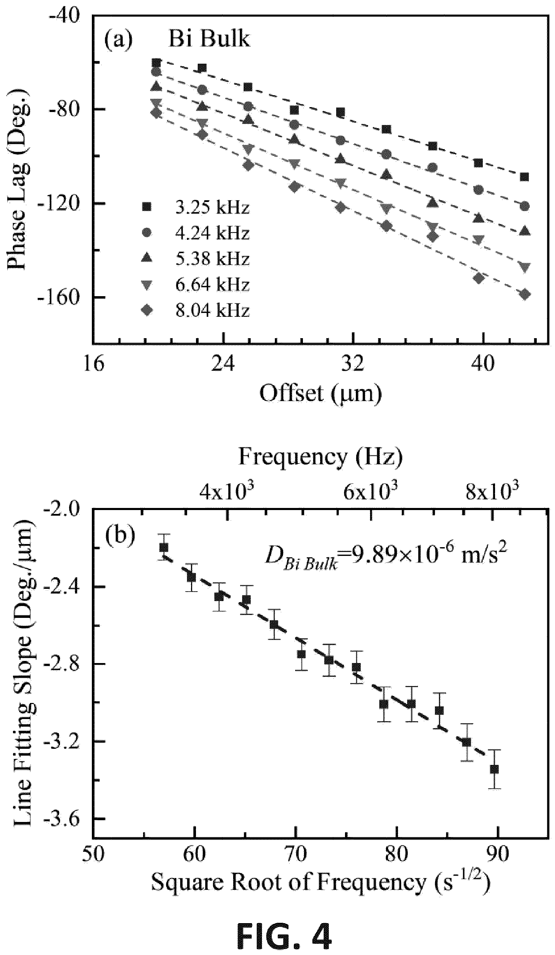

Figure 4A displays the phase lag as a function of the spatial offset, and for different excitation frequencies. Similarly, as for the case of the suspended thin films studied in the previous section, the dependence of $\phi$ on $\Delta x$ and $f^{1/2}$ is also linear as predicted by Eq. 10.

However, unlike the case of the suspended Si thin films, the heat flow geometry for a bulk sample (12) is 2D, i.e.,

heat propagates in the directions perpendicular to the line-shaped heater.

In this case, the spatial dependence of the temperature field is given by Eq. 9. In fact, the phase lag and the corresponding slopes, $\partial\phi/\partial\Delta x$, shown in Fig. 4 are prone to larger experimental error as compared to the case of the suspended Si thin films (1 D heat flow), which is mainly due to the faster spatial decay of signal as predicted by Eq. 9. In addition, the different temperature coefficients of reflectivity (at the probe wavelength of 532 nm) of Bi as compared to Si also account for the different signal levels observed in these systems.

The thermal diffusivity of the Bi sample was obtained fitting the slopes $(\partial\phi/\partial\Delta x)$ shown in Fig. 4B, obtaining $D = 9.89 \times 10^{-6}$ $m^2/s$, which is in good agreement with previously reported values.

We have also studied the influence of using a Au metallic transducer on the phase lag response. The use of a metallic transducer in thermoreflectance experiments is usually desirable for three main reasons:

- the extinction coefficient of a metal for visible incident light is typically rather small (<100 nm), hence, allowing to approximate the heat source as superficial;
- no direct excitation of the electronic systems of the material under investigation occurs, avoiding heat transport through excitons which could be relevant for some materials with indirect optical bandgap; and
- the temperature coefficient of reflectance of Au is relatively large, $\Delta R/R_0 \approx 2 \times 10^{-4}$, for 532 nm probe wavelength which naturally results in enhanced thermal signal.

In particular, we address to what extent the present method can be applied to multilayered systems. Typically, the presence of a metallic transducer can have a strong impact on the measured phase lag, which originates from in-plane heat conduction in the transducer layer, and which is particularly relevant when the thermal conductivity of the transducer $(\kappa_{tr})$ is much larger than the thermal conductivity of the substrate $(\kappa_s)$.

We have chosen as case study a bulk crystalline Si substrate as well as a bulk Glass substrate, hence, addressing the cases with $\kappa_{tr} \approx \kappa_s$ (Si), and $\kappa_{tr} \gg \kappa_s$ (Glass). For the case with $\kappa_{tr} \ll \kappa_s$, the signal is fully dominated by the substrate, as we will show solving numerically Eq. 11.

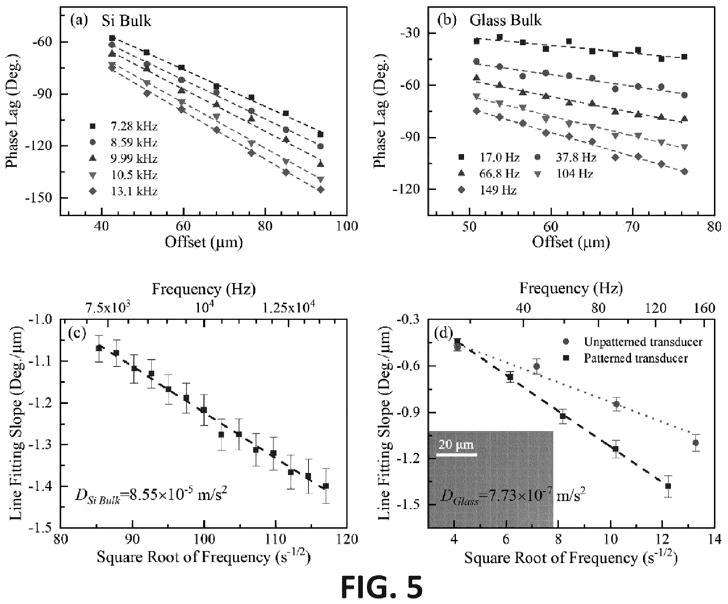

Figure 5A displays the phase lag data for a Si substrate covered with a 60 nm thick Au transducer, which was deposited using thermal evaporation with a base pressure better than $10^{-6}$ mbar. The phase lag curves were collected at excitation frequencies between 7 kHz and 13 kHz, and spatial offsets between 40 $\mu$m and 90 $\mu$m. The data exhibits a similar trend as observed for the case of bulk Bi, i.e., even in the presence of the Au transducer the phase lag depends linearly on the spatial offset.

Figure 5C displays the slopes as extracted from the linear fits of the phase lag curves in Fig. 5A as a function of $f^{1/2}$. Once more, the relation between $\partial\phi/\partial\Delta x$ and $f^{1/2}$ is linear. We applied Eq. 10 to compute the thermal diffusivity of the sample obtaining, $D = 8.55 \times 10^{-5}$ $m^2/s$, which is in good agreement with reported values for Si substrates.

It is interesting to note that even in the presence of the Au transducer, it is still possible to directly obtain the thermal diffusivity of the substrate from the double derivative of the phase lag, $\partial^2\phi/[\partial\Delta x \partial f^{1/2}]$, as previously done for the case of the suspended thin films and for the Bi substrate without transducer.

We have confirmed this approximation solving numerically Eq. 11 for the studied geometry and observing that when the thermal conductivity of the transducer is similar or lower to the thermal conductivity of the underlying substrate, the response is mostly dominated by the substrate and, hence, the present method can be applied without significant loss of accuracy, which is estimated in < 2% for the present case.

Finally, we also discuss the case of a Glass substrate covered with a 60 nm thick Au transducer deposited through thermal evaporation in similar conditions as for the case of the Si substrate. The thermal conductivity of the Au transducer was determined by measuring its electrical conductivity through the Van der Pauw method, and using the Wiedemann-Franz law obtaining, $\kappa_{tr} = 246$ Wm$^{-1}$K$^{-1}$.

This case is substantially different from the previous since the thermal conductivity of the Au transducer is more than two orders of magnitude larger than the thermal conductivity of the Glass sample ($\kappa_{Glass} \approx 1$). In fact, it is already expected that the response will be dominated by a combination of both, the Glass sample and the Au transducer.

In order to further study this effect, we have patterned the Au transducer using focused ion beam with the purpose of substantially reducing its in-plane thermal conductivity. Hence, we provide experimental data for the case of a Glass substrate with a continuous Au transducer, $\kappa_{\parallel} \approx \kappa_{\perp}$, as well as for the case with a patterned Au transducer, $\kappa_{\parallel} \approx 0$.

The patterned Au transducer was fabricated in a 150 $\mu$m $\times$ 150 $\mu$m area and was obtained drilling narrow ($\approx$ 15 nm) vertical and horizontal channels on the as-deposited Au transducer. The depth of these channels was carefully calibrated in order not to damage the surface of the sample (12), hence, the residual thickness of the transducer at the bottom of each channel is < 3 nm. The horizontal and vertical spacing between each channel was 5 $\mu$m.

The inset of Figure 5D displays an optical image of the pattern. Figure 5B displays the phase lag data for the case of the Glass substrate with the patterned Au transducer in the frequency range from 17 Hz to 150 Hz. We have selected a rather low frequency range in order to enhance the thermal penetration depth, $\mu^2 = D/(\pi f)$, arising from the low thermal diffusivity of the Glass substrate and, hence, to increases the relative sensitivity of the thermal properties of the Glass substrate with respect to the Au transducer.

Figure 5D displays the slopes, $\partial\phi/\partial\Delta x$, as a function of $f^{1/2}$ for both Glass samples, i.e., with and without patterned transducer. Fitting the data corresponding to the sample with patterned substrate renders a thermal diffusivity $D = 7.73 \times 10^{-7}$ $m^2/s$, which is in good agreement with previously reported values for similar substrates. In the case of the sample with non-patterned transducer a direct fit to the data points in Fig. 5D renders $D = 2.55 \times 10^{-6}$ $m^2/s$, which is obviously larger than the typical values observed for Glass substrates.

As we have previously anticipated, the origin of this larger value is heat conduction through the Au transducer. In other words, when in-plane heat transport within the transducer is not negligible, the present method renders the effective thermal conductivity of the system.

Finally, we note that even for the cases where the transducer has a non-negligible contribution to the in-plane thermal conductance of the multilayered system, the response $\phi(\Delta x)$ is still linear for each excitation frequency.

However, the second order derivative, $\partial^2\phi/\partial\Delta x\partial f^{1/2}$, provides the thermal diffusivity of the multilayered systems, which depends on the used experimental conditions such as the offset and excitation frequency ranges. This result is simply a consequence of the expansion of $K_0(qr)$ for $qr \gg 1$. In this case, it is still possible to obtain the thermal diffusivity of the sample through numerical simulations reflecting the experimental conditions.

## Claims

1. Device for thermal diffusivity analysis of a solid-state sample (12) that partially reflects light, **characterized in that** comprises:

   - a pump laser (1) with a beam propagation ratio (M2), preferably smaller than 1.2, with a wavelength range between $\lambda^{pump}$ = 250-1500 nm, and with its power modulated to a harmonic waveform, that generates a pump beam (25),
   - optical elements (4) that modify the spatial intensity distribution of the pump laser (1) such that, after focusing with a lens, the image of the pump laser (1) results in a narrow, lower than 10 $\mu$m, line-shaped image with a length ranging between 400 $\mu$m and 1000 $\mu$m, and with uniform intensity distribution,
   - a probe laser (2) with a wavelength between $\lambda^{probe}$ = 250-1500 nm and an intensity constant in time, generating a probe beam (24),
   - an electronic device (3) to modulate harmonically the output power of the pump laser (1) between 10 Hz and 100 kHz,
   - a deflectable mirror (6), following the pump laser (1), to control the offset between the pump beam (25) and probe beam (24),
   - a first beam splitter (10) following the probe laser (2) that couples the probe beam (24) into an optical axis and, at the same time, generates a sample of the probe beam (24),
   - a second beam splitter (7) following the deflectable mirror (6) that couples the pump beam (25) into the optical axis,
   - an objective lens (11), following the beam splitters (10, 7), intended to focus the beams (24, 25) on the sample (12), generating a pump beam back reflection and probe beam back reflection,
   - a first and a second notch-filters (15, 16), that receive the pump beam back reflection and probe beam back reflection from the sample (12), and selects the pump or probe wavelength,
   - an AC-coupled balanced detector (17), placed to receive the pump beam back reflection and probe beam back reflection in a first input (B) from the notch-filters (15, 16) and the sample of the probe beam (24) in a second input (A) from the ND filter (18), and is configured to generate a frequency modulated voltage arising from the thermal oscillations on the surface of the sample (12),
   - a neutral density filter (ND) (18) to control the power of the probe beam (24) at the secondary input of the balanced detector (A), and
   - a lock-in amplifier (20), connected to the output channel of the detector (17).

2. The device of claim 1, which additionally comprises a noise eater (8) following the probe laser (2), that receives the probe beam (24) and reduces its intrinsic noise.

3. The device of claim 1, wherein the wavelength of the probe laser (2) and the pump laser (1) is set between 400-880 nm.

4. The device of claim 1, wherein the pump laser (1) is a laser system with intracavity power modulation capability.

5. The device of claim 1, which additionally comprises an electro-optical modulator following the pump laser (1) to modulate its output power to a harmonic waveform.

6. The device of claim 1, wherein the optical element (4) is a diffractive optical element (DOE) (4) following the pump laser (1) placed on an angular rotation unit to control the alignment of the pump laser (1) with respect to the sample (12), that obtains a line-shaped uniform intensity distribution of the pump beam (25).

7. The device of claim 1, wherein the optical element (4) is a fiber with a square core, following the pump laser (1), which homogenises its spatial intensity distribution, followed by a cylindrical lens to focus the laser to a line-shaped geometry.

8. The device of claim 1, wherein the optical element (4) is an optical diffuser and a cylindrical lens, following the pump laser (1), to focus the pump laser to a line-shaped geometry with uniform spatial power distribution.

9. A method for thermal diffusivity analysis of a solid-state sample (12) that partially reflects light, **characterized in that** it comprises the following steps:

i) providing a pump laser (1), working in a wavelength range between $\lambda^{pump}$ = 250-1500 nm with a beam propagation ratio (M2), preferably smaller than 1.2, and a uniform spatial intensity distribution, generating a pump beam (25) directed to the sample (12),

ii) providing a probe laser (1), working in a wavelength range between $\lambda^{probe}$ = 250-1500 nm, and an intensity constant in time, generating a probe beam (24) directed to the sample (12),

iii) modifying the spatial intensity distribution of the pump laser (1), to obtain a spatially uniform intensity distribution,

iv) increasing the power density of the pump laser (1) until a temperature rise is observed on the sample (12),

v) harmonically modulating the power of the pump laser (1) in the frequency range between 10 Hz and 100 kHz,

vi) measuring the phase of the pump beam (25) reflected from the sample (12) and setting it as zero-phase lag,

vii) measuring the phase lag of the probe beam (24) reflected from the sample (12),

viii) increasing the offset between the pump and probe beam (25, 24) at least by 1 micron as measured on the sample (12),

ix) repeating the steps vii) and viii), to obtain the phase lag between the pump and probe beams (25, 24) as a function of the offset between them,

x) plotting in a curve the phase lag as a function of the offset between the pump and probe beams (25, 24), and

xi) computing the slope of the curve of step x),

xii) repeating steps v) to xi), changing the excitation frequency of the pump laser (1),

xiii) compute the thermal diffusivity using the following expression:

$$D=\pi/[\partial^2\phi/(\partial\Delta x\partial f^{1/2})]^2$$

wherein D is the thermal diffusivity, *x* are the spatial coordinates, $\phi$ is the phase lag and *f* is the excitation frequency in Hz.

10. The method of claim 9, which comprises an additional step of depositing a metallic layer on top of the sample (12), with a thickness ranging from 40 to 100 nm before step i) if the sample (12) is made of a material transparent to the wavelengths of the pump beam (25).

11. The method of claim 9 wherein the frequency range in step v) is a frequency range where $D=\pi/[\partial 2\varphi/(\partial\Delta x\partial f1/2)]2$ is constant.

12. The method of claim 9, wherein the wavelength of the pump laser (1), is set between 400-880 nm.

**Patentansprüche**

1. Vorrichtung zur Temperaturleitfähigkeitsanalyse einer Festkörpersonde (12), die teilweise Licht reflektiert, **dadurch gekennzeichnet, dass** sie umfasst:

- einen Pumplaser (1) mit einem Strahlausbreitungsverhältnis (M2) von vorzugsweise kleiner als 1,2, mit einem

Wellenlängenbereich zwischen $\lambda^{Pumpe}$ = 250 bis 1500 nm und mit einer auf eine harmonische Wellenform modulierten Leistung, die einen Pumpstrahl (25) erzeugt,
- optische Elemente (4), die die räumliche Intensitätsverteilung des Pumplasers (1) so modifizieren, dass das Bild des Pumplasers (1) nach dem Fokussieren mit einer Linse ein schmales, weniger als 10 μm großes, linienförmiges Bild mit einer Länge zwischen 400 μm und 1000 μm und einer gleichmäßigen Intensitätsverteilung ergibt,
- einen Sondenlaser (2) mit einer Wellenlänge zwischen $\lambda^{Sonde}$ = 250 bis 1500 nm und einer zeitlich konstanten Intensität, der einen Sondenstrahl (24) erzeugt,
- eine elektronische Vorrichtung (3) zum harmonischen Modulieren der Ausgangsleistung des Pumplasers (1) zwischen 10 Hz und 100 kHz,
- einen ablenkbaren Spiegel (6), der auf den Pumplaser (1) folgt, um den Versatz zwischen dem Pumpstrahl (25) und dem Sondenstrahl (24) zu steuern,
- einen auf den Sondenlaser (2) folgenden ersten Strahlteiler (10), der den Sondenstrahl (24) in eine optische Achse einkoppelt und gleichzeitig eine Probe des Sondenstrahls (24) erzeugt,
- einen auf den ablenkbaren Spiegel (6) folgenden zweiten Strahlteiler (7), der den Pumpstrahl (25) in die optische Achse einkoppelt,
- eine auf die Strahlteiler (10, 7)folgende Objektivlinse (11), die dazu bestimmt ist, die Strahlen (24, 25) auf die Probe (12) zu fokussieren, wobei eine Rückreflexion des Pumpstrahls und eine Rückreflexion des Sondenstrahls erzeugt werden,
- ein erstes und ein zweites Kerbfilter (15, 16), die die Rückreflexion des Pumpstrahls und des Sondenstrahls von der Probe (12) empfangen und die Pump- oder Sondenwellenlänge auswählen,
- einen wechselstromgekoppelten symmetrischen Detektor (17), der so angeordnet ist, dass er die Rückreflexion des Pumpstrahls und die Rückreflexion des Sondenstrahls an einem ersten Eingang (B) von den Kerbfiltern (15, 16) und die Probe des Sondenstrahls (24) an einem zweiten Eingang (A) von dem ND-Filter (18) empfängt, und der so konfiguriert ist, dass er eine frequenzmodulierte Spannung erzeugt, die aus den thermischen Schwingungen an der Oberfläche der Probe (12) entsteht,
- ein Neutraldichtefilter (ND) (18) zum Steuern der Leistung des Sondenstrahls (24) am Sekundäreingang des symmetrischen Detektors (A) und
- einen Lock-in-Verstärker (20), der mit dem Ausgangskanal des Detektors (17) verbunden ist.

2. Vorrichtung nach Anspruch 1, die zusätzlich ein dem Sondenlaser (2) nachgeschaltetes Rauschfilter (8) umfasst, das den Sondenstrahl (24) empfängt und dessen Eigenrauschen reduziert.

3. Vorrichtung nach Anspruch 1, wobei die Wellenlänge des Sondenlasers (2) und des Pumplasers (1) zwischen 400 und 880 nm eingestellt ist.

4. Vorrichtung nach Anspruch 1, wobei der Pumplaser (1) ein Lasersystem mit der Fähigkeit zur Leistungsmodulation innerhalb des Hohlraums ist.

5. Vorrichtung nach Anspruch 1, die zusätzlich einen elektro-optischen Modulator umfasst, der auf den Pumplaser (1) folgt, um dessen Ausgangsleistung auf eine harmonische Wellenform zu modulieren.

6. Vorrichtung nach Anspruch 1, wobei das optische Element (4) ein diffraktives optisches Element (DOE) (4) ist, das auf den Pumplaser (1) folgt und auf einer Winkeldreheinheit angeordnet ist, um die Ausrichtung des Pumplasers (1) in Bezug auf die Probe (12) zu steuern, wodurch eine linienförmige gleichmäßige Intensitätsverteilung des Pumpstrahls (25) erhalten wird.

7. Vorrichtung nach Anspruch 1, wobei das optische Element (4) eine Faser mit quadratischem Kern ist, die auf den Pumplaser (1) folgt und dessen räumliche Intensitätsverteilung homogenisiert, gefolgt von einer Zylinderlinse zum Fokussieren des Lasers auf eine linienförmige Geometrie.

8. Vorrichtung nach Anspruch 1, wobei das optische Element (4) ein optischer Diffusor und eine Zylinderlinse ist, die auf den Pumplaser (1) folgen, um den Pumplaser auf eine linienförmige Geometrie mit gleichmäßiger räumlicher Leistungsverteilung zu fokussieren.

9. Verfahren zur Temperaturleitfähigkeitsanalyse Festkörperprobe (12), die teilweise Licht reflektiert, **dadurch gekennzeichnet, dass** es die folgenden Schritte umfasst:

i) Bereitstellen eines Pumplasers (1), der in einem Wellenlängenbereich zwischen $\lambda^{Pumpe}$ = 250 bis 1500 nm mit einem Strahlausbreitungsverhältnis (M2) von vorzugsweise kleiner als 1,2 und einer gleichmäßigen räumlichen Intensitätsverteilung arbeitet und einen auf die Probe (12) gerichteten Pumpstrahl (25) erzeugt,

ii) Bereitstellen eines Sondenlasers (1), der in einem Wellenlängenbereich zwischen $\lambda^{Sonde}$ = 250 bis 1500 nm und mit einer zeitlich konstanten Intensität arbeitet und einen auf die Probe (12) gerichteten Sondenstrahl (24) erzeugt,

iii) Modifizieren der räumlichen Intensitätsverteilung des Pumplasers (1), um eine räumlich gleichmäßige Intensitätsverteilung zu erhalten,

iv) Erhöhen der Leistungsdichte des Pumplasers (1), bis ein Temperaturanstieg an der Probe (12) zu beobachten ist,

v) harmonisches Modulieren der Leistung des Pumplasers (1) im Frequenzbereich zwischen 10 Hz und 100 kHz,

vi) Messen der Phase des von der Probe (12) reflektierten Pumpstrahls (25) und Einstellen als Null-Phasenverzögerung,

vii) Messen der Phasenverzögerung des von der Probe (12) reflektierten Sondenstrahls (24),

viii) Erhöhen des an der Probe (12) gemessenen Versatzes zwischen dem Pump- und dem Sondenstrahl (25, 24) um mindestens 1 Mikrometer,

ix) Wiederholen der Schritte vii) und viii), um die Phasenverzögerung zwischen dem Pump- und dem Sondenstrahl (25, 24) als Funktion des Versatzes zwischen ihnen zu erhalten,

x) Aufzeichnen der Phasenverzögerung in einer Kurve als Funktion des Versatzes zwischen Pump- und Sondenstrahl (25, 24) und

xi) Berechnen der Steigung der Kurve von Schritt x),

xii) Wiederholen der Schritte v) bis xi) zum Ändern der Erregerfrequenz des Pumplasers (1),

xiii) Berechnen der Temperaturleitfähigkeit unter Verwendung des folgenden Ausdrucks: $D = \pi/[\partial^2\phi/(\partial\Delta x\partial f^{1/2})]^2$

wobei D die Temperaturleitfähigkeit ist, x die Raumkoordinaten, $\varphi$ die Phasenverzögerung ist und $f$ die Erregerfrequenz in Hz ist.

**10.** Verfahren nach Anspruch 9, das einen zusätzlichen Schritt des Abscheidens einer metallischen Schicht oben auf die Probe (12) mit einer Dicke von 40 bis 100 nm vor Schritt i) umfasst, wenn die Probe (12) aus einem für die Wellenlängen des Pumpstrahls (25) transparenten Material besteht.

**11.** Verfahren nach Anspruch 9, wobei der Frequenzbereich in Schritt v) ein Frequenzbereich ist, in dem $D = \pi/[\partial 2\phi/(\partial\Delta x\partial f1/2)]2$ konstant ist.

**12.** Verfahren nach Anspruch 9, wobei die Wellenlänge des Pumplasers (1) zwischen 400 und 880 nm eingestellt ist.

**Revendications**

**1.** Dispositif d'analyse de diffusivité thermique d'un échantillon à l'état solide (12) qui réfléchit partiellement la lumière, **caractérisé en ce qu'**il comprend :

- un laser de pompe (1) avec un rapport de propagation de faisceau (M2), de préférence inférieur à 1,2, avec une plage de longueur d'onde entre $\lambda^{pompe}$ = 250-1500 nm, et dont la puissance est modulée en fonction d'une forme d'onde harmonique, qui génère un faisceau de pompe (25),

- des éléments optiques (4) qui modifient la distribution spatiale d'intensité du laser de pompe (1) de telle sorte que, après une focalisation avec une lentille, l'image du laser de pompe (1) résulte en une image étroite, inférieur à 10 $\mu$m, en forme de ligne avec une longueur comprise entre 400 $\mu$m et 1000 $\mu$m, et avec une distribution uniforme d'intensité,

- un laser de sonde (2) avec une longueur d'onde entre $\lambda^{sonde}$ = 250-1500 nm et une intensité constante dans le temps, générant un faisceau de sonde (24),

- un dispositif électronique (3) permettant de moduler harmoniquement la puissance de sortie du laser de pompe (1) entre 10 Hz et 100 kHz,

- un miroir déflecteur (6), suivant le laser de pompe (1), permettant de commander le décalage entre le faisceau de pompe (25) et le faisceau de sonde (24),

- un premier séparateur de faisceau (10) suivant le laser de sonde (2) qui couple le faisceau de sonde (24) dans un axe optique et, en même temps, génère un échantillon du faisceau de sonde (24),

- un second séparateur de faisceau (7) suivant le miroir déflecteur (6) qui couple le faisceau de pompe (25) dans l'axe optique,

- une lentille d'objectif (11), suivant les séparateurs de faisceau (10, 7), destinée à focaliser les faisceaux (24, 25) sur l'échantillon (12), générant une réflexion arrière de faisceau de pompe et une réflexion arrière de faisceau de sonde,

- un premier et un second filtre à encoches (15, 16), qui reçoivent la réflexion arrière de faisceau de pompe et la réflexion arrière de faisceau de sonde depuis l'échantillon (12), et sélectionnent la longueur d'onde de pompe ou de sonde,

- un détecteur équilibré à couplage CA (17), placé pour recevoir la réflexion arrière de faisceau de pompe et la réflexion arrière de faisceau de sonde dans une première entrée (B) des filtres à encoches (15, 16) et l'échantillon du faisceau de sonde (24) dans une seconde entrée (A) du filtre ND (18), et est conçu pour générer une tension modulée en fréquence provenant des oscillations thermiques sur la surface de l'échantillon (12),

- un filtre à densité neutre (ND) (18) pour commander la puissance du faisceau de sonde (24) au niveau de l'entrée secondaire du détecteur équilibré (A), et

- un amplificateur à détection synchrone (20), connecté au canal de sortie du détecteur (17).

2. Dispositif selon la revendication 1, qui comprend de plus un dispositif de réduction du bruit (8) suivant le laser de sonde (2), qui reçoit le faisceau de sonde (24) et réduit son bruit intrinsèque.

3. Dispositif selon la revendication 1, dans lequel la longueur d'onde du laser de sonde (2) et du laser de pompe (1) est définie entre 400 et 880 nm.

4. Dispositif selon la revendication 1, dans lequel le laser de pompe (1) est un système laser avec une capacité de modulation de puissance intracavité.

5. Dispositif selon la revendication 1, qui comprend de plus un modulateur électro-optique suivant le laser de pompe (1) pour moduler sa puissance de sortie en une forme d'onde harmonique.

6. Dispositif selon la revendication 1, dans lequel l'élément optique (4) est un élément optique diffractif (DOE) (4) suivant le laser de pompe (1) placé sur une unité de rotation angulaire pour commander l'alignement du laser de pompe (1) par rapport à l'échantillon (12), qui obtient une distribution uniforme d'intensité en forme de ligne du faisceau de pompe (25).

7. Dispositif selon la revendication 1, dans lequel l'élément optique (4) est une fibre à âme carrée, suivant le laser de pompe (1), qui homogénéise sa distribution d'intensité spatiale, suivi d'une lentille cylindrique pour focaliser le laser dans une géométrie en forme de ligne.

8. Dispositif selon la revendication 1, dans lequel l'élément optique (4) est un diffuseur optique et une lentille cylindrique, suivant le laser de pompe (1), pour focaliser le laser de pompe dans une géométrie en forme de ligne avec une distribution spatiale uniforme de puissance.

9. Procédé d'analyse de diffusivité thermique d'un échantillon à l'état solide (12) qui réfléchit partiellement la lumière, **caractérisé en ce qu'**il comprend les étapes suivantes :

   i) fourniture d'un laser de pompe (1), fonctionnant dans une plage de longueurs d'onde entre $\lambda^{pompe}$ = 250-1500 nm avec un rapport de propagation de faisceau (M2), de préférence inférieur à 1,2, et une distribution spatiale uniforme d'intensité, générant un faisceau de pompe (25) dirigé vers l'échantillon (12),

   ii) fourniture d'un laser de sonde (1), fonctionnant dans une plage de longueurs d'onde entre $\lambda^{sonde}$ = 250-1500 nm, et une intensité constante dans le temps, générant un faisceau de sonde (24) dirigé vers l'échantillon (12),

   iii) modification de la distribution spatiale d'intensité du laser de pompe (1), pour obtenir une distribution uniforme dans l'espace d'intensité,

   iv) augmentation de la densité de puissance du laser de pompe (1) jusqu'à ce qu'une élévation de température soit observée sur l'échantillon (12),

   v) modulation harmonique de la puissance du laser de pompe (1) dans la plage de fréquences entre 10 Hz et 100 kHz,

   vi) mesure de la phase du faisceau de pompe (25) réfléchi par l'échantillon (12) et définition de celle-ci sur un retard de phase nul,

   vii) mesure du retard de phase du faisceau de sonde (24) réfléchi par l'échantillon (12),

   viii) augmentation du décalage entre le faisceau de pompe et de sonde (25, 24) d'au moins 1 micron, tel que mesuré sur l'échantillon (12),

ix) répétition des étapes vii) et viii), pour obtenir le retard de phase entre les faisceaux de pompe et de sonde (25, 24) en fonction du décalage entre eux,

x) traçage dans une courbe du retard de phase en fonction du décalage entre les faisceaux de pompe et de sonde (25, 24), et

xi) calcul de la pente de la courbe de l'étape x),

xii) répétition des étapes v) à xi), changeant la fréquence d'excitation du laser de pompe (1),

xiii) calcul de la diffusivité thermique à l'aide de l'expression suivante :

$$D=\pi/[\partial^2\phi/(\partial\Delta x\partial f^{1/2})]^2$$

dans laquelle D est la diffusivité thermique, x sont les coordonnées spatiales, $\phi$ est le retard de phase et *f* est la fréquence d'excitation en Hz.

10. Procédé selon la revendication 9, qui comprend une étape supplémentaire de dépôt d'une couche métallique sur le dessus de l'échantillon (12), avec une épaisseur comprise entre 40 et 100 nm avant l'étape i) si l'échantillon (12) est constitué d'un matériau transparent aux longueurs d'onde du faisceau de pompe (25).

11. Procédé selon la revendication 9 dans lequel la plage de fréquences à l'étape v) est une plage de fréquences où $D=\pi/[\partial2\phi/(\partial\Delta x\partial f1/2)]2$ est constant.

12. Procédé selon la revendication 9, dans lequel la longueur d'onde du laser de pompe (1), est défini entre 400 et 880 nm.

FIG. 1

FIG. 2

FIG. 3

**FIG. 4**

FIG. 5